# EUROPEAN PATENT SPECIFICATION

(11) **EP 3 188 966 B1**
(45) Date of publication and mention of the grant of the patent: **21.06.2023**
(21) Application number: 15837845.5
(22) Date of filing: 31.08.2015
(51) Int. Cl.: B64C 27/08, B64C 27/10, B64C 39/02

(54) **TILT WINGED MULTI ROTOR**
KIPPFLÜGLER MIT MEHREREN ROTOREN
ROTORS MULTIPLES À AILETTES INCLINÉES

(30) Priority: 02.09.2014 IL 23444314
(43) Date of publication of application: 12.07.2017
(73) Proprietor: Amit, Regev, 6094600 Moshav Bitsaron (IL)
(72) Inventor: Amit, Regev, 6094600 Moshav Bitsaron (IL)
(74) Representative: Crippa, Paolo Ernesto
(86) International application number: PCT/IL2015/050874
(87) International publication number: WO 2016/035068

(56) References cited:
- CN-A- 102 285 450
- CN-A- 102 285 450
- DE-A1-102008 025 607
- JP-A- 2012 228 944
- JP-A- 2012 228 944
- US-A- 1 891 166
- US-A1- 2012 083 945
- US-A1- 2014 124 613
- US-A1- 2014 131 507

## Description

### TECHNICAL FIELD

The present invention refers to a multi-winged aircraft with three or more engines, which is equipped with a free wing that can rotate freely around its longitudinal axis, thus providing the aircraft with lift during horizontal flight.

### BACKGROUND ART

In recent years, a broad-based industry has emerged that engages in the development, manufacture, and use of aircraft able to take off vertically and then fly horizontally. These aircraft may be either manned or unmanned and have a variety of names, such as VTOL (vertical takeoff and landing) aircraft, multi-rotor aircraft, tilt aircraft, and more. Such aircraft are characterized by having several engines (propeller or jet) that enable vertical takeoff and landing of the aircraft. Once the aircraft is airborne, the orientation of the engines may be adjusted in order to propel the aircraft forward in horizontal flight. For the sake of the clarity, we shall, in this request, refer to said aircraft as "multirotor aircraft". Multirotor aircraft can take off, hover, and fly horizontally using either propeller engines or jet engines. The aircraft is controlled and stabilized using sensors and a flight control computer that control and transmit commands to the aircraft's engines and propellers.

Publication DE 10 2008 025 607 describes an aircraft that has a main body that may serve as a wing, few propellers and two additional wings that are attached as an extension to a main rotary shafts that include an adjustable axial rotation mechanism that controls the angle and the operation of the additional wings.

Therefore, it is clear that the wings in this publication are not free wings but controlled wing as customary in the art.

Publication JP2012/228944 describes a multi-rotor helicopter with four passive blade plates positioned in each side of the multi-rotor helicopter so that in case there is a cross-wind while hovering on a specific ground point the wind will exerts force on the specific passive blade plate that faces the cross-wind and by that causing the multi-rotor helicopter to incline. This inclination is needed for keeping the multi-rotor helicopter hovering on the same ground point. These passive blade plates are not designed or shaped as a wing at all, they do not provide a lifting force, and they are serve for inclining the multi-rotor helicopter and not for providing upward lift forces during flying and also not for energy saving.

Publication CN102285450 describes a three-axis aircraft that includes three tail pipes and three rotors which are positioned at the end of each of those tail pipes and one of these tail pipes includes a fuselage. This three axis aircraft includes three motors and therefore the rotation direction of the third rotor may causes yawing, assuming that the first two rotors are nullify each other. For preventing this result, this three-axis aircraft includes that fuselage that serves as a guide vane and that is positioned on the tail pipe of this third rotor for creating a horizontal force that nullify the horizontal moment of this third rotor and by that to prevent the potential yawing of the three-axis aircraft. This guide vane is controlled by a steering gear which is designed to control its tilt angle for achieving the correct horizontal force that should be equal to the horizontal moment force of this third rotor. It is clear that this guide vane is not a free wing and it is fixed to the tail pipe by means such as steering gear for controlling its angle. In addition, the guide vane serves for nullifying the yawing potential of the three-axis aircraft and not for providing upward lift forces during flying and also not for energy saving.

Publication US 2014/124613 describes an aircraft with an aerodynamic body that is connected to a couple of transmission brace rods by a pivot connection. This pivot connection is not free. The aerodynamic body includes a transmission mechanism that control the angle of the aerodynamic body.

On the other hand, according to the invention, a multirotor aircraft according to claim 1 is provided.

One advantage of multirotor aircraft is their ability to take off and land vertically, hover in the air, and even fly in the horizontal direction.

One of the disadvantages of multirotor aircraft lies in the relatively short time they can remain airborne. This limitation stems from the fact that when the aircraft is in horizontal flight, some of the energy from the engines is utilized for its horizontal, forward movement. Therefore, certain models of multirotor aircraft include wings, to enhance energy efficiency in horizontal flight. In certain models of multirotor aircraft equipped with wings, the engines are attached to the wings by a fixed connection, so that the angle between them is fixed, and rotary movement of the engines occurs simultaneously with wing rotation. In other models, the wing and engines are fixed in relation to the chassis. The disadvantage of the aforementioned aircraft in which engines and wing are interconnected by a fixed connection, comes into play both during takeoff and landing and when hovering. When the wings are vertical relative to the earth (with engines facing upwards, functioning as in a helicopter) and conditions are windy, drag and instability ensue. Similarly, in the case of aircraft in which both engines and the wing are connected to the chassis by a fixed connection, a negative lift and/or drag is created on the wing during takeoff, hovering, or landing with either a rear wind or a side wind,.

This causes loss of energy (requiring increased engine operation) or worse, causes the aircraft to deviate from its vertical landing line or hovering point. This problem becomes especially severe when such aircraft is to be landed on the roof of a building, in which case a side wind at the precise moment of landing may divert the aircraft from its landing point.

Using actuators and various mechanical mechanisms to stabilize the aircraft reduce the reliability, due to the addition of components as said, and when the components are critical for flight, this becomes a real hazard. Furthermore, said mechanisms are heavy and thus reduce the maximum flight time or freight-carrying capacity of the aircraft. Accordingly, in this invention free wings that can move freely on their longitudinal shaft are attached to the multirotor. The free wings may be either controlled by an actuator or they may be uncontrolled, in which case the angle and lift they produce are a result of the flow of air in relation to them.

We shall now summarize the problem that exists with the various models of winged multirotor aircraft: (a) in aircraft equipped with a wing that is fixed relative to the chassis: during horizontal flight, the wing functions as in a conventional aircraft. When hovering (during which the aircraft remains in place above a fixed point on the earth) or when landing (when the aircraft is positioned vertically above a fixed point on the earth) and when conditions are not windy, no problem arises.

However, if a side wind, gusts of wind, or a rear wind occurs, the aircraft is shifted from the fixed point, and this poses a problem as previously mentioned.
(b) in aircraft equipped with a wing that is fixed to the engines, in which the engines rotate together with the wing relative to the aircraft chassis: during horizontal flight, the aircraft functions as a conventional airplane. However, when hovering or landing, the engines face upward while the wings are directed vertically towards the ground; thus, any wind from any direction causes the aircraft to shift from said fixed point.

In addition, there it is impossible to control the disturbance, since moving the wing itself has an effect, creating a clash between the correcting of the engines and of the wings.

### List of drawings

The intention of the drawings attached to the application is not to limit the scope of the invention and its application. The drawings are intended only to illustrate the invention and they constitute only one of its many possible implementations.
FIG. 1A depicts a multirotor aircraft not according to the claims in horizontal position, and the force vectors acting on it.
FIG. 1B depicts a multirotor aircraft not according to the claims tilted forward, and in horizontal flight forward.
FIG. 2 depicts a multirotor aircraft (100) including a pair of free wings (400).
FIG. 3 depicts a multirotor aircraft (100) including free wings (400) and the force vectors acting on it in horizontal flight.
FIG. 4 depicts the multirotor (1000) not according to the claims yawing to the right.
FIG. 5 depicts the multirotor (1000) not according to the claims yawing to the left.
FIGS 6 - 9 depict the multirotor (1000) equipped with a free wing (4000).

### THE INVENTION

The present invention refers to a multirotor aircraft with a free wing, designed so that, on the one hand, wings may be used to enhance flight efficiency and save energy and, on the other hand, the problem that exists with multirotor aircraft equipped with wings that are attached to the chassis or engines of the aircraft is avoided.

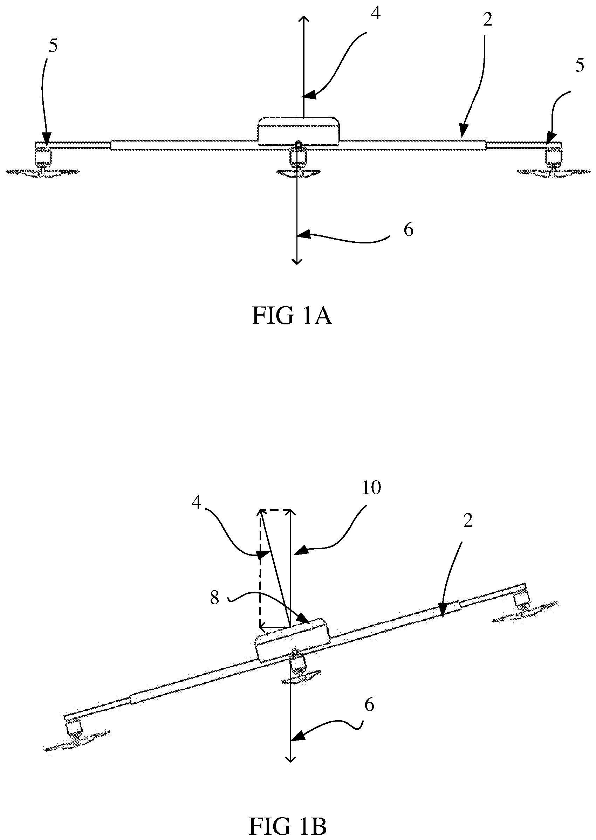

The multirotor aircraft is stabilized and controlled autonomously by means of sensors and a flight computer that operate its engines and propellers. Thus, for example, if the user wants the aircraft to fly forward, the rear engines receive a command to accelerate, and the front engines receive a command to slow down. This creates the moment that rotates and tilts the craft forward, while the thrust propels it in the horizontal direction. Since some of the energy is required for forward motion, the power of the engines must be increased in order for the aircraft to maintain altitude; thus, the craft consumes more energy in this state, as depicted in Figures 1A and 1B. Figure 1A depicts a multirotor craft (2) hovering in the horizontal position. The lift vector (4) is the overall force applied by the engines and propellers (5) and the gravity vector (6) is the center of gravity of the aircraft (2). When these two forces are equal in magnitude, the aircraft (2) is in a state of equilibrium i.e. hovering and maintaining its flight altitude.

Drawing 1B depicts an aircraft (2) tilted forward in horizontal forward flight (or when facing a wind), whereby the lift vector (4) is the resultant force created from the action of the engines and the propellers (5) that may be broken down into components so that the forward vector (8) is the component of the resultant force (4) that enables forward movement, and vector (10) is the component of the resultant force that determines craft altitude.

It can be seen that vector (10) is smaller than both vector (4) and vector (6); hence, in this state the craft will lose altitude and descend. To enable the aircraft to maintain its altitude, the resultant force must be increased until vector (10) is equal to vector (6) i.e. the overall weight of the craft. This will result in equilibrium, enabling the craft to maintain flight altitude. Increasing the resultant force causes waste of energy and shortens flight time.

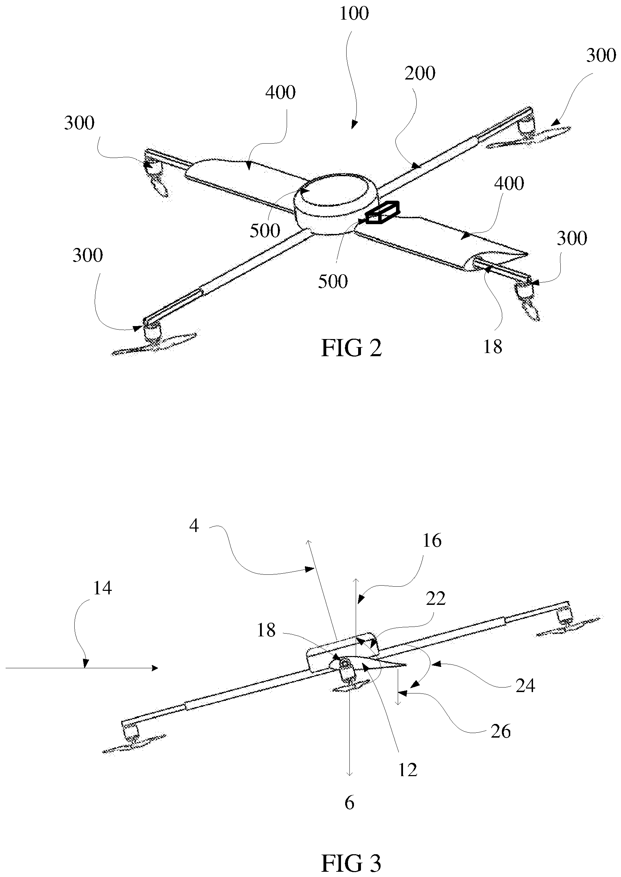

The present invention refers to a multirotor aircraft (100) that comprises a chassis (200), three or more engines (300), and a free wing (400) (or pair of wings on either side of the chassis) as depicted in Figures 2 and 3. The free wing (400) is attached to the chassis (200) by means of an axial connection (18). Thus, the angle between the free wing (400) and the chassis (200) may be changed using an actuator (500) or by force of the flow of air over the wing.

In order for the free wings (400) to create lift in flight with a horizontal component (hereinafter "horizontal flight"), they must be at a specific positive attack angle relative to the airflow direction (14). Since the chassis (200) tilts forward towards the airflow, it is important that the free wing (400) not be permanently attached to the chassis. Otherwise, a negative angle will be created, causing loss of both altitude and energy.

To bring the free wing to a specific positive angle relative to the airflow, the actuators that govern the wing steering or computer-controlled wing-mounted engines may be used. Alternatively, a totally free wing (400) may be used that attains its optimal state relative to air movement automatically, without intervention. This is possible thanks to the wing's structure, but in this case it will be less aerodynamically efficient for a variety of flight positions.

The free wing (400) is attached to the chassis (200) by means of an axle (18), in such a way that enables the free wing to rotate freely around this axle. The free wing (400) is automatically stabilized against the airflow (14) (or is stabilized by a computer-controlled actuator), adding upward lift, which is denoted as a vector (16) and supplements the lift created by the engines (300).

The free wing, depicted for instance, in **Figure 3**, may rotate freely around the axle (18). Vector (16) is the upward lift created by the free wing, whose center is positioned behind the axle (18), thus creating moment (22) that causes the trail edge of the wing to rise around the axle (18). A control surface located on the wing or the upward tilting of the trail edge of the wing result in a downward force (26) that causes moment (24) in the opposite direction of upward moment (22), until a state of equilibrium is reached in which the wing is stabilized vis-à-vis the airflow and produces lift. To maintain efficiency while hovering, the aircraft (100) must be kept facing the wind, and when in flight, the wing must be kept free vis-à-vis the airflow. Designated software, the flight computer, and sensors installed on the aircraft are all used to maintain the orientation of the free wing (400) during horizontal flight.

It is clear from the aforementioned and from the drawings attached to this patent application that the present invention refers to multirotor aircraft (100) with three or more propellers (300) that are attached to the chassis (200) of the aircraft (100) by a fixed connection, so that the angle between the propellers (300) and the chassis is a fixed. In addition, the aircraft (100), subject of the present invention, is equipped with one or more free wings (400) connected to the chassis (200) by means of an axle (18) that enables to change the angle between the wing (400) and the chassis (200) of the aircraft (100). The attack angle of the wing (400) may be changed using an actuator (500) that may be a motor, a propeller, or any other means of rotating the wing. Alternatively, since the free wing (400) is attached in such a way that it can rotate freely, its attack angle may change according to the flow of air towards and over the free wing (400).

Thus, during horizontal flight, the horizontal airflow around the wing adjusts the attack angle of the wing in such a way that the lift vector of the wing (400) is in the upward direction. This increases the lift of the aircraft (100) and reduces the amount of energy required to operate the propellers (300). The invention may be implemented in other versions of aircraft (100) by adding two free wings (400). In addition, the axial connection (18) of the wings (400) to the chassis (200) may be such that the wings may rotate 360 degrees, endless rotations.

When the aircraft (100) is hovering, taking off or landing in a side wind, for example, the aircraft (100) will tilt sideways towards the wind so as to remain above the ground point, and the wing will revolve until it reaches a position in which the leading edge of the wing (400) faces the wind, thus considerably reducing drag as well as the extent to which the aircraft (100) diverts from the ground point over which it is supposed to be. As shown by the drawings and As clarification, each side of the wing (left and right) can rotate independently, this makes the control of the multirotor possible, especially on the yaw axis, since the drag effect each side of the wing differently, so by making each side of the wing independent creates very small momentum compare to the momentum create by the multirotor motors and propellers, for the same reason the multirotor is more stable on windy conditions.

The free wing (400) may be equipped with control surfaces to enable optimal, quick control of wing lift and of the aircraft. Alternatively, the free wing (400) may be equipped with a limiting device to limit the possibility of the wing revolving upward about its axle (18). In other words, in order to create lift at low speeds, the rear part of the wing should not rise above a certain angle. Said limiting device, however, should not prevent the rear part of the wing from being lowered, as required for takeoff, hovering, and landing.

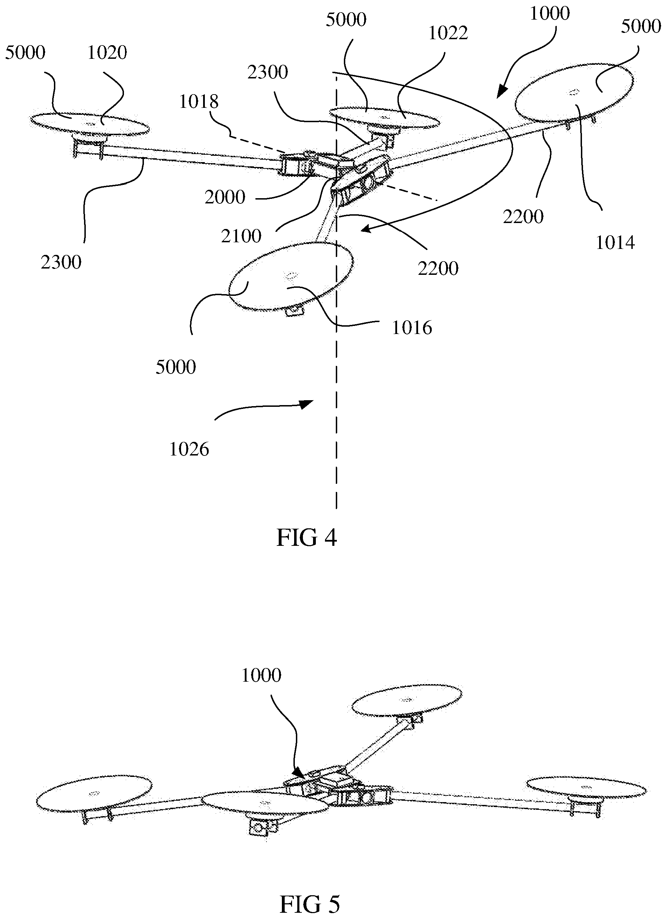

A multirotor (1000) not according to the claims is schematically depicted in Figures 4 and 5. The revolution around the axle (1026), which is the vertical axle in the multirotor aircraft (1000), is usually the result of the difference in moment between the propellers (5000) that are revolving clockwise and those that are revolving counterclockwise. These moments are relatively small, for optimal control of the multirotor. The multirotor (1000) includes a chassis (2000) and four or more propellers (5000). The chassis (2000) consists of a main body (2100) and a pair of shafts (2200) (2300), which, for the sake of this explanation, we shall refer to as "right shaft" (2200) and "left shaft" (2300).

A propeller (5000) is attached to the end of each of said shafts and each shaft (2200) (2300) is connected to the main body (2100) by an axial connection (1018). Assuming the four propellers (5000) operate with the same force, upwards for instance, the multirotor (1000) will ascend vertically in such a way that all four engines (5000) are in one horizontal plane.

Should the user want to yaw the multirotor (1000) say, to the right, he may do so by increasing power in one propeller on the right shaft (2200) and reducing power in the other propeller on the same shaft (2200). This will cause the right shaft (2200) to revolving around the axle (1018) connected to the main body (2100), since one propeller will ascend and the other will descend, resulting in the multirotor yawing to the right.

Figure 4 depicts the multirotor (1000) yawing clockwise to the right, due to an increase in the thrust of the engine (1014) on the right shaft (2200) and the engine (1020) on the left shaft (2300) (it is possible to reduce the thrust in engines 1016 and 1022 as well, simultaneously) thus causing the multirotor to yaw around the main axle (1026). Figure 5 depicts the opposite situation in which the multirotor yaws to the left.

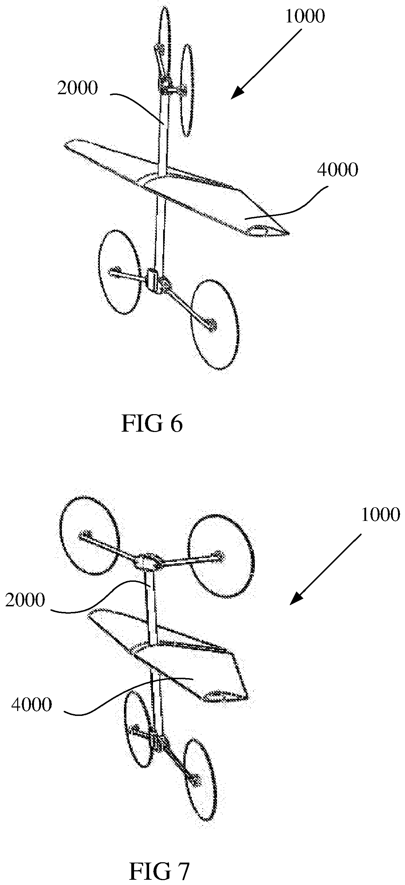

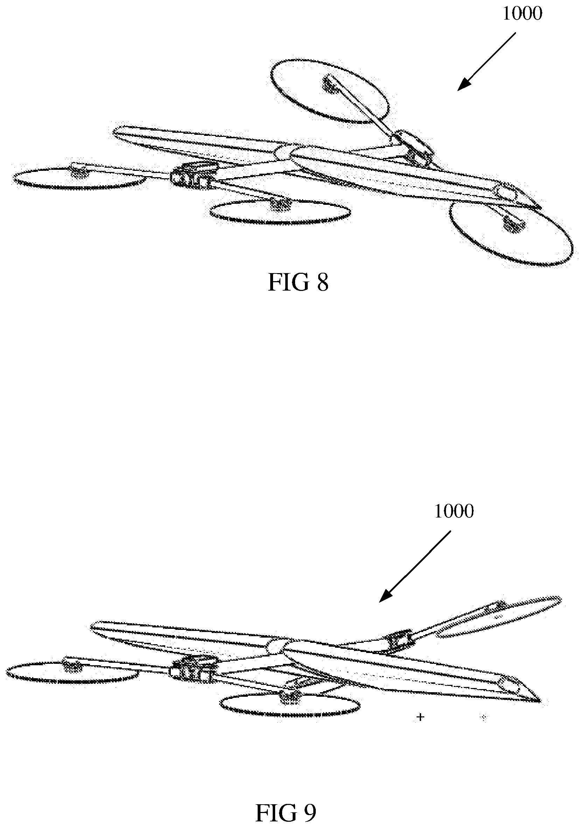

A second version of the present invention refers to the aforementioned multirotor (1000) wherein it is also equipped with a free wing (4000) that is attached to the main body (2100) of the chassis (2000) by means of an axial connection, as depicted schematically in Figures 6-9 in several positions.

## Claims

1. A multirotor aircraft that comprises a chassis (200), at least three engines (300), wherein each of them is equipped with a propeller, **characterized in that** the multirotor aircraft further comprises at least one free wing (400); **in that** said free wing (400) is attached to said chassis by an axial connection (18) so that an angle between the free wing and the chassis can change due to flow of air over said free wing; and **in that** said free wing is configured to rotate freely around said axial connection (18).

2. The multirotor aircraft of claim 1 including a computer controller actuator (500) adapted to change the angle between the free wing and the chassis.

3. The multirotor aircraft of claims 1 or 2 wherein said free wing includes a control surface.

4. The multirotor aircraft of claims 1 or 2 wherein said free wing includes a movement-limiting device.

5. The multirotor aircraft according to claim 4 wherein said movement-limiting device is designed to limit the possibility of said free wing to revolve upward about said axial connection and wherein said movement-limiting device is designed to not prevent the rear part of the wing from being lowered during at least one maneuver selected from takeoff, hovering or landing.

## Patentansprüche

1. Luftfahrzeug mit mehreren Rotoren, das ein Flugwerk (200), mindestens drei Motoren (300) umfasst, wobei jeder davon mit einem Propeller ausgestattet ist, **dadurch gekennzeichnet, dass** das Luftfahrzeug mit mehreren Rotoren ferner mindestens einen freien Tragflügel (400) umfasst; dass der freie Tragflügel (400) durch eine axiale Verbindung (18) an dem Flugwerk befestigt ist, sodass sich ein Winkel zwischen dem freien Tragflügel und dem Flugwerk aufgrund von Luftstrom über dem freien Tragflügel ändern kann; und dass der freie Tragflügel dazu konfiguriert ist, frei um die axiale Verbindung (18) zu rotieren.

2. Luftfahrzeug mit mehreren Rotoren nach Anspruch 1, das ein computergesteuertes Stellglied (500) einschließt, das dazu beschaffen ist, den Winkel zwischen dem freien Tragflügel und dem Flugwerk zu ändern.

3. Luftfahrzeug mit mehreren Rotoren nach Anspruch 1 oder 2, wobei der freie Tragflügel eine Steuerfläche einschließt.

4. Luftfahrzeug mit mehreren Rotoren nach Anspruch 1 oder 2, wobei der freie Tragflügel eine bewegungsbegrenzende Vorrichtung einschließt.

5. Luftfahrzeug mit mehreren Rotoren nach Anspruch 4, wobei die bewegungsbegrenzende Vorrichtung dazu ausgelegt ist, die Möglichkeit des freien Tragflügels, nach oben um die axiale Verbindung zu drehen, zu begrenzen, und wobei die bewegungsbegrenzende Vorrichtung dazu ausgelegt ist, nicht zu verhindern, dass der rückwärtige Teil des Tragflügels während mindestens eines Manövers, ausgewählt aus Start, Schwebeflug oder Landung, abgesenkt wird.

## Revendications

1. Aéronef à rotors multiples qui comprend un châssis (200), au moins trois moteurs (300), chacun d'entre eux étant équipé d'une hélice, **caractérisé en ce que** l'aéronef à rotors multiples comprend en outre au moins une ailette libre (400) ; **en ce que** ladite ailette libre (400) est fixée audit châssis par une liaison axiale (18) de façon qu'un angle entre l'ailette libre et le châssis puisse changer en raison de l'écoulement d'air sur ladite ailette libre ; et **en ce que** ladite ailette libre est conçue pour tourner librement autour de ladite liaison axiale (18).

2. Aéronef à rotors multiples selon la revendication 1, comportant un actionneur commandé par ordinateur (500) adapté au changement de l'angle entre l'ailette libre et le châssis.

3. Aéronef à rotors multiples selon les revendications 1 ou 2, dans lequel ladite ailette libre comporte une surface de commande.

4. Aéronef à rotors multiples selon les revendications 1 ou 2, dans lequel ladite ailette libre comporte un dispositif de limitation de mouvement.

5. Aéronef à rotors multiples selon la revendication 4, dans lequel ledit dispositif de limitation de mouvement est conçu pour limiter la possibilité pour ladite ailette libre de tourner vers le haut autour de ladite liaison axiale et dans lequel ledit dispositif de limitation de mouvement est conçu pour ne pas empêcher la partie arrière de l'ailette d'être abaissée pendant au moins une manoeuvre sélectionnée parmi le décollage, le vol stationnaire ou l'atterrissage.
